# EUROPEAN PATENT APPLICATION

(11) **EP 4 604 044 A1**
(43) Date of publication of application: **20.08.2025**
(21) Application number: 24157828.5
(22) Date of filing: 15.02.2024
(51) Int. Cl.: G06Q 40/02, G06Q 40/06

(54) **MANAGING ASSETS OF A USER**

(71) Applicant: Mastercard International Incorporated, Purchase, NY 10577 (US)
(72) Inventor: Baghirov, Imran, Baku (AZ)
(74) Representative: Barker Brettell LLP

(57) **Abstract**

The present invention relates to a computer implemented method for training a machine learning model 140 to manage financial assets. The method comprises obtaining access to an account of a user 125, wherein the account holds the financial assets, detecting details of transactions 210 that are made using the financial assets of the account and obtaining details of motives 220, influenced by external factors 225, that led to each of the transactions 210 being made. The details of the transactions 210 and motives 220 are then input into the machine learning model 140 to train the machine learning model 140. The machine learning model 140 is then used to generate predictions of transactions 410 to be made at a later point in time in response to the external factors 225, based on the past transactions and motives of the user 125.

## Description

### Field

The present invention relates to methods and systems for training a machine learning model for managing financial assets. In particular, the method and systems allow for a machine learning model to be trained such that it is configured to predict and advise future transactions based on the economical variables and financial activity of the user.

### Background

When looking to manage and secure financial assets in the future, an owner of the financial assets may face difficulties. As time goes on, the original wealth of the owner may decrease, and assets may be lost. This may be caused by a number of factors, such as economic factors or a mismanagement of wealth. The owner may wish to secure their assets such that this loss is minimised.

Problems may arise when an owner of financial assets is looking to secure their wealth for the future. For example, if the owner is no longer able to manage their wealth or secure their assets, or after the death of the owner, the financial assets once held by the owner may be lost or devalue over time. This may be that someone else, for example a beneficiary, has been given ownership of the financial assets and is not able to manage the assets to the same degree as the original owner or in the same way as the original owner had been managing their wealth. The beneficiary receiving the assets may lose much of the wealth if they're not able to properly manage the financial assets. It is common for assets and wealth to be lost after two or three generations. Therefore, there is a need to ensure that the financial assets of the owner are properly managed and protected in order to secure their wealth for future generations.

In other instances, successful financial asset managers may like to share their insights with other people who are looking to become better at their financial decisions. Transfer of these insights from one person to another currently happens over books, articles, newsletters, advisory services and asset management services. However, there is need for an easier and more efficient way for successful financial assets managers to share, sell, or exchange their financial insights with other people and businesses.

The present invention sets out to alleviate these problems relating to the loss of financial assets.

### Summary of Invention

According to an aspect there is provided a computer implemented method for training a machine learning model to-manage financial assets, the method comprising: obtaining access to an account of a user, wherein the account holds financial assets; detecting details of a plurality of transactions that are made using the financial assets of the account; obtaining, for each of the plurality of transactions, details of a motive that led to said transaction being made, wherein each motive for each of the plurality of transactions has been influenced by an external factor at a time of said transaction; inputting, as inputs into a machine learning model, the details of each of the plurality of transactions and the details of the motive that led to said transactions being made; and training the machine learning model on said inputs, wherein the machine learning model is trained to generate a prediction of a transaction to be made at a later point in time, such that the predicted transaction can be made using the financial assets of the account at said later point in time based on the external factor at said later point in time.

In this way, a machine learning model is trained based on the past financial activity and transactions of a user, such that the machine learning model can learn the transaction patterns and activity of the account belonging to the user. The past transactions made by the user related to the financial assets associated with their account(s) are input into the machine learning model, along with the motive behind each of the transactions. This is so the machine learning model may be trained not only on the transactions that have occurred, but the motive behind each of the transactions. The model may then be used to generate predictions of transactions that may be made in the future. Advantageously, this allows the user to secure their financial assets and may help prevent loss of their assets, as the machine learning model can generate predictions of transactions that could be made, based on their past financial activity and account(s), such that the user's financial activity and transactions relating to their financial assets may remain consistent.

The account holds or is in association with the financial assets. This may be, for example, a bank account that holds funds or credit. The account of the user and financial assets may also be an account with an investment platform that has access to a share of stocks on a financial stock market. Obtaining access to the account may comprise obtaining access to monitor the financial activity and transactions of the account or obtaining access to view the financial activity and transactions of the account. Alternatively, obtaining access to the account may comprise obtaining control to monitor the financial activity and use the assets in making future financial transactions.

The method may also comprise obtaining access to a plurality of accounts of the user, wherein the plurality of accounts hold financial assets. The financial assets may be held within the one account, or if the method comprises obtaining access to a plurality of accounts of the user, the financial assets may be held across the plurality of accounts. The plurality of transactions detected may therefore all be associated with one account of the user, or they may be associated with different accounts of the plurality of accounts held by the user.

The motive that led to a transaction being made may be the user's reason why the transaction occurred, which is influenced by one or more external factors. The external factor that influences the motive is a factor external to the account of the user that causes a response from the user, where the response is the transactions that they make. The motive that led to each of the transactions being made may therefore be the reason as to why the user made that specific transaction or plurality of transactions in response to the external factor. For example, the transaction may be a selling of a share of a stock on a stock market, the motive may be to reduce loss of investments, and the external factor that influenced this motive may be a decrease in the value of a stock.

Each transaction has a motive that led it to being made. Each motive may have been influenced by a different external factor, such that the method involves a plurality of external factors that influence the motives of the plurality of transactions. The machine learning model may learn the user's reasonings for a transaction under different external factors. This may then generate more accurate predictions in the future, as when faced with the same or similar external factors, the machine learning model may take the same approach when it comes to making a transaction.

Alternatively, it may be the same external factor that influenced each of the motives. Additionally, each motive may also have been influenced by a plurality of different external factors, or each motive may have been influenced by a plurality of the same external factors. Each transaction within the plurality of transactions may also have a plurality of motives that led it to being made, and each motive may have a plurality of external factors that have influenced it. The external factors may also comprise different states at different points in time. For example, an external factor may be the interest rates at the time of the transaction being made, and the state of said interest rates at the time of the transaction being made may therefore be, for example, a high, low or moderate interest rate.

The method may also further comprise inputting, as input, into the machine learning model, the details of the external factor at the time of said transaction for each motive.

The later point in time comprises a point in time that is later relative to the point in time in which the plurality of transactions was made and is later than the point in time in which the machine learning model is trained or initially trained. The external factor at the time of said transaction is the same external factor as the external factor at the time of said later point in time. Between the time of said transaction and the later point in time, the external factor has not changed but the state of the external factor may have changed.

Preferably, obtaining, for each of the plurality of transactions, details of a motive that led to said transaction being made, may comprise: receiving, from a user device, the details of the motive that led to each of the transactions being made and optionally the external factor that influenced each motive for each of the transactions.

In this way, a reason or motive as to why the transaction occurred may be received directly from the user device.

Preferably, obtaining access to the account of the user may comprise using open banking to receive data relating to the plurality of transactions that are made using the financial assets of the account.

In this way, access to the account of the user may be obtained through open banking. Advantageously, this allows the machine learning model to monitor all transactions that are received and sent from the account of the user. The method therefore allows for easy sharing of all of the data relating to the financial activity of the user from the account to the machine learning model.

In some arrangements, the method may further comprise: obtaining details of an additional transaction made using the financial assets of the account; obtaining details of an additional external factor at a time of the additional transaction, wherein the additional external factor influenced a motive that led to the additional transaction being made; inputting the additional external factor at the time of the additional transaction into the machine learning model; generating a prediction, using the machine learning model, of a predicted additional transaction that uses the financial assets of the account, wherein the predicted additional transaction is based on the additional external factor at the time of the additional transaction; determining a difference between the additional transaction and the predicted additional transaction; re-training the machine learning model based on the difference between the additional transaction and the predicted additional transaction.

In this way, the machine learning model may be validated. A predicted transaction is compared to a transaction the user would, or has, made with the same financial assets and the same external factor, such that any differences between the predictions of the machine learning model and the actual financial activity of the user can be determined. The machine learning model may therefore be validated and re-trained based on this difference. Advantageously, this may improve the accuracy of the machine learning model's predictions, as it introduces a further step of training to ensure that the machine learning model's predictions mirror the financial activity of the user.

The step of determining the difference may comprise comparing details of the predicted additional transaction to details of the additional transaction actually made by the user based on the additional external factor. The additional transaction is an additional transaction to those detected in the initial plurality of transactions. The additional external factor may be the same external factor or one of the external factors (if there is a plurality of external factors), or it may be a different external factor.

The re-training of the machine learning model may comprise adjusting a parameter of the machine learning model and re-generating, using the machine learning model, the prediction of the additional transaction to be made until the re-generated predicted additional transaction is the same, or sufficiently the same, as the additional transaction performed by the user.

The step of obtaining details of an additional transaction that is made using the financial assets of the account may comprise detecting details of an additional transaction that is made using the financial assets of the account, or it may comprise receiving an input from a user device of an additional transaction that the user would make with the financial assets of the account based on the additional external factor (but may not actually have yet been made).

The step of obtaining, for the additional transaction, details of an additional external factor at a time of the additional transaction, may comprise detecting details of an additional external factor at a time of the additional transaction, or it may comprise receiving an input from a user device of the additional factor that influenced their motive in making the additional transaction. In the case where the additional transaction and additional external factor is received from the user device, a transaction made by the user does not have to be detected, and instead the user may input into the user device the transaction they would have made given the same external factor, as outlined above.

Preferably, the method may further comprise: generating a score corresponding to the difference; and providing the score to a user device.

Advantageously, this provides a way for the user and system to monitor how well the machine learning model is being trained, and how accurate the machine learning model may be at different points during its training and validating. If the score indicates that the machine learning model would have been able to predict a transaction made by the user, this demonstrates that the machine learning model has been trained enough to produce accurate predictions.

The score represents how similar the predicted second transaction is to the second transaction performed by the user. For example, a high score may indicate that the prediction and transaction performed are highly similar, and therefore the difference is minimal. Whereas a low score indicates that the prediction and transaction performed are not similar, and therefore the difference is large. A high score may alternatively indicate that the prediction and transaction performed are not similar, and therefore the difference is large, whilst a low score may indicate that the prediction and transaction performed are highly similar meaning the difference is minimal.

The method may also comprise, determining if the score is below a predetermined threshold, and if the score is below the predetermined threshold, changing a set of parameters of the machine learning model until the probability of whether the machine learning model would have predicted the second transaction has increased such that the score is equal to or above the predetermined threshold i.e., the difference between prediction and actual transaction is minimized. The parameters of the machine learning model may comprise, for example, which data features are used, features importance or coefficients and weights of the model.

If the score is below the predetermined threshold, the method may alternatively comprise training the machine learning model on a further plurality of detected transactions that each have a motive.

Preferably, the method may further comprise: generating virtual financial assets maintained within a virtual environment, wherein the virtual financial assets are a copy of the financial assets of the user; providing access of the virtual financial assets to the machine learning model; inputting into the machine learning model, the external factor at the later point in time; generating, using the machine learning model, a prediction of a virtual transaction to be made using the virtual financial assets, based on the external factor at the later point in time; receiving an input, from a user device, details of a virtual transaction to be made using the virtual financial assets based on the external factor at the later point in time; determining a difference between the predicted virtual transaction and the input from the user device; and re-training the machine learning model on the difference between the predicted virtual transaction and the input from the user device.

In this way, the trained machine learning model may be validated. By providing a set of virtual financial assets to the machine learning model or allowing the machine learning model access to the virtual financial assets, the machine learning model may make predictions of transactions using the virtual assets. These predictions can therefore be compared to the transactions that the user would have made given the same virtual assets (as indicated in their input from the user device). If any difference occurs between the machine learning model's transactions and the transactions that the user would have made, the machine learning model can then be re-trained to further learn the transaction patterns of the user. This provides the machine learning model with further data, which after being validated using this further data, will increase the accuracy of the machine learning model's predictions and performance.

The providing access of the virtual financial assets to the machine learning model may comprise allowing the machine learning model access to view the virtual financial assets within the virtual environment or allowing the machine learning model access to monitor the virtual financial assets and use the virtual financial assets in executing or performing the virtual predicted transaction. The step of determining the difference may comprise comparing details of the predicted virtual transaction to details of the input from the user device i.e., details of the transaction that the user would make with the virtual financial assets of the virtual account and based on the external factor at the later point in time. The step of determining the difference may also optionally comprise obtaining details of the predicted virtual transaction and obtaining details of the transaction that the user would make with the virtual financial assets of the account based on the external factor at the later point in time.

The steps of: receiving an input from the user device of a transaction that the user would make with the virtual financial assets based on the external factor at the later point in time; determining a difference between the predicted virtual transaction and the input from the user device and re-training the machine learning model based on the difference between the predicted virtual transaction and the input from the user, may alternatively be: receiving an input from the user device of whether the user would not have made the predicted virtual transaction with the virtual financial assets based on the external factor at the later point in time, and if the input is that the user would not have made the predicted virtual t transaction, the method may further comprise re-training the machine learning model based on the fact the user would not have made the predicted virtual transaction.

The virtual financial assets are a copy of the financial assets of the user. However, they are not linked to the account of the user. Therefore, any virtual transaction performed using the virtual financial assets will not be performed using the actual financial assets of the account. They can be considered a simulated environment. The virtual environment may be a private environment maintained by a server such as a sandbox AI environment, for instance.

Preferably, the external factor is an environmental factor or an economic factor. This allows for the machine learning model to take into account different types of external factors that may have influenced the user's motive in making each of the plurality of transactions. Taking into account environmental factors and economic factors may increase the accuracy of the predictions generated by the trained machine learning model, as different types of external factors may have different effects on the transactions conducted by the user. The training of the machine learning model may now take into account a wider range of factors that influence the motives of the user.

The environmental factors may be, for example, weather, time of year, time of day or occurrence of any natural disasters. The economic factors may be, for example, interest rates, inflation rates, exchange rates, economic growth of a country or group of countries, the increase or decrease in the GDP (Growth Domestic Product) of a country, commodity prices, increase or decrease in tax rates.

In some arrangements, the method may further comprise: receiving, from an additional device, additional factors associated with each of the plurality of transactions at the time of said transactions, and wherein the additional device is a third party device; and wherein the step of inputting, as inputs into a machine learning model, the details of each of the plurality of transactions and the details of each motive that led to said transactions being made, further comprises: inputting the inputs and the additional factors into the machine learning model; and training the machine learning model on the inputs and the additional factors, such that the machine learning model is trained to generate the predictions of the transaction to be made at a later point in time based on the additional factors, the details of each of the plurality of transactions and the details of the motive that led to said transactions being made.

Advantageously, this increases the accuracy of the predictions made by the machine learning model. The additional factors may comprise any factor that is not one of the external factors but has influenced the motive that led to each of the plurality of transactions being made. By taking into account additional factors that may have indirectly led to each of the transactions being made by the user, the machine learning model may generate improved predictions that can take into account factors that may have affected the user's decisions, other than their motive or the external factor that influenced their motive directly. The machine learning model may therefore be trained on more data that would have been relevant to the user when making their past transactions, which may further improve the machine learning models predictions of the user's transaction patterns and behaviours.

The third-party device may be a device associated with any data resources such as public or private databases, wherein the additional factors at the time of each of the transactions can be received from this device.

The additional factors associated with the plurality of transactions may also include environmental factors and/or economic factors. The economic factors may be, for example, interest rates, inflation rates, exchange rates, economic growth of a country or group of countries, the increase or decrease in the GDP (Growth Domestic Product) of a country, commodity prices, increase or decrease in tax rates. The environmental factors may be, for example, weather, time of year, time of day or occurrence of any natural disasters. The external factor that influenced the motive of a transaction made may also be any of the above economic or environmental factors.

Preferably the method may further comprise: obtaining details of the external factor at the later point in time; inputting, into the trained machine learning model, the details of the external factor at the later point in time; and generating a prediction, at the later point in time using the trained machine learning model, of a new transaction that uses the financial assets of the account, wherein the predicted new transaction is based on the external factor at the later point in time.

In this way, the trained machine learning model can be input with data corresponding to an external factor or change in an external factor, and the trained machine learning model can be used to predict whether the user would have made a transaction based on this external factor. Since the trained machine learning model is being used to generate the predictions, this prediction of the new transaction will be based on the past motives and transactions of the user through the training of the model. Therefore, the trained machine learning model can predict the financial activity of the user by generating predictions of which transactions the user would make, and which transactions the user would not make based on the external factors. This allows the user to secure their assets, as by training and using the machine learning model to predict their financial activity, the user can rely on the model to generate transaction predictions accurate to the transactions they would have made with the same financial assets and under the same conditions or external factors. The trained machine learning model may therefore make predictions to secure the user's financial assets without any further input from the user.

The obtaining data relating to the external factor may comprise monitoring the external factor to detect data relating to the external factor at the time of making the prediction or at the later point in time. The obtaining of the data relating to the external factor may be obtaining the data from, for example, a global public database, a private database, the internet, or any digital source of information.

The prediction of the new transaction may also be based on a plurality of external factors at the later point in time. For example, the rest of the external factors that influenced each of the motives of the initial plurality of transactions may be monitored and data may be obtained relating to each of these external factors at the later point in time. The prediction of the new transaction is not limited to being based solely on one of the external factors.

Furthermore, a plurality of predictions of new transactions may also be generated by the trained machine learning model, each based on one or more of the external factors.

The method may further comprise: sending the predicted new transaction as a suggestion to a further user device.

In this way, the trained machine learning model can be given access to the user's assets and accounts to make suggestions of transactions that should be made based on whether the user would have made the same transaction, given the external factors and past motives of the user. The further user may then decide as to whether to execute the transaction themselves based on the trained machine learning model's prediction. The further user device may be the user device, or a device belonging to any other party given permission to receive the suggestion of the new transaction and to make the transactions.

The user may wish to sell or licence the machine learning model which has been trained using their financial activity and past transaction. To do this, the device belonging to another party that has been given permission to receive the suggestions may be, for example, a device belonging to a party who has brought the trained machine learning model from the user or has acquired a licence to use the trained machine learning model. In this way, the user may capitalise on their investment and financial decisions by offering their trained machine learning model to another party who wishes to receive advice and predictions based on the financial decisions of the user.

The method may further comprise: automatically performing the predicted new transaction with the financial assets of the account upon generating the prediction.

In this way, the trained machine learning model can be given access to use the assets and accounts of the user to make decisions and transactions without the user's direct permission for making each new transaction. As the machine learning model has been trained on the user's past transactions and decisions, the new transactions carried out by the machine learning model are based on the transactions the user would have made. For example, this method may be implemented after the user's death such that another person may secure the user's assets by using this machine learning model to automatically make any transactions with the user's financial assets that the user themselves would have made. Further, the fact that the machine learning model can execute a new transaction without permission from the user, or the user's beneficiary, may increase the efficiency of the whole process and reduce the computer resources used, as the user does not have to receive and approve each new transaction predicted by the machine learning model. The machine learning model can make all the decisions and transaction itself without any further input.

This also increases the security of the user's assets. If only the trained machine learning model can make decisions on which transactions to make with the financial assets, this blocks any un-authorized persons or parties from making transactions using the user's financial assets. In this way, the user may secure their assets as only the trained machine learning model can have access to the assets to execute transactions, and the transactions that are made by the trained machine learning model are based only on the past transactions of the user themselves.

Preferably, the method may further comprise: receiving requirements from the user device, wherein the requirements are characteristics of the plurality of transactions that have been limited by the user; and determining whether the predicted new transaction complies with the requirements; and if the predicted new transaction does comply with the requirements, performing the predicted new transaction using the financial assets of the account.

Advantageously, this allows for the user to determine the capabilities of the machine learning model by setting requirements of the transactions that the machine learning model can predict and perform using the user's financial assets. This may be, for example, how many financial assets at one time the machine learning model can use for a single transaction or the maximum amount of money that can be involved in a single transactions. This determines how the machine learning model may be trained and therefore used to generate predictions. By setting the requirements of the predictions generated by the machine learning model, the machine learning model may therefore only be used for future transactions with characteristics that fall within the characteristics of a transaction set by the user.

In this way, the method may be used to secure the user's assets for the future, as when the trained machine learning model may be used to generate predictions using the financial assets of the user, the user can specify the characteristics of the predictions made by the machine learning model. This may be, for example, the user restricting how many financial assets and for how long the model can use said assets. The specifying of these requirements gives the user more control in training and validating the model to suit their needs.

The requirements received by the user device may relate to transaction characteristics such as countries to invest in, excluding assets to buy, excluding operations to perform, a minimum percentage of investments, durations of ownerships of assets, maximum amount of assets that can be borrowed, person that can or cannot send or receive money and assets, maximums value of each withdrawal, maximum amount of each investment, and any other parameter that limits the machine learning model's use of the financial assets.

Preferably, wherein the user is a first user, the method may further comprise: re-training the trained machine learning model using motives, received from a second user, that led to a second plurality of transactions being made, influenced by an external factor; wherein the re-trained machine learning model is trained to generate a further prediction of a transaction to be made at the later point in time.

Advantageously, the machine learning model can be further trained to generate predictions for future transactions based on more than one user's financial activity. The machine learning model can be trained using transaction data and the motive for each of the transactions from a plurality of different users (i.e., initially trained on the first user transactions and motives, and later trained on a second user's transactions and motives). This may increase the performance of the trained machine learning model, as its predictions are now based off a multiple different users, compared to the financial activity of a single user. The second user may be the same as the further user who may receive the suggestions of the predicted new transactions using the further user device.

Training the machine learning model on multiple different users may create a new derived version of the machine learning model. The derived machine learning model may also be traded, exchanged, rented and licenced to other parties who wish to receive the further trained machine learning model. This process may occur for multiple iterations, which can create a tree of machine learning models derived and re-trained by earlier owners of the model.

According to a further aspect there is provided a system for training a machine learning model to manage financial assets, the system configured to : obtain access to an account of a user, wherein the account holds financial assets; detect details of a plurality of transactions that are made using the financial assets of the account; obtain, for each of the plurality of transactions, details of a motive that led to said transaction being made, wherein each motive for each of the plurality of transactions has been influenced by an external factor at a time of said transaction; input, as inputs into a machine learning model, the details of each of the plurality of transactions and the details of the motive that led to said transactions being made; and train the machine learning model on said inputs, wherein the machine learning model is trained to generate a prediction of a transaction to be made at a later point in time, such that the predicted transaction can be made using the financial assets of the account at said later point in time based on the external factor at said later point in time.

The system may be configured to perform any of the above-mentioned method steps according to the above aspects of the invention.

According to a further aspect there is provided a non-transitory computer-readable medium comprising instructions which, when executed by a computer, cause the computer to obtain access to an account of a user, wherein the account holds financial assets; detect details of a plurality of transactions that are made using the financial assets of the account; obtain, for each of the plurality of transactions, details of a motive that led to said transaction being made, wherein each motive for each of the plurality of transactions has been influenced by an external factor at a time of said transaction; input, as inputs into a machine learning model, the details of each of the plurality of transactions and the details of the motive that led to said transactions being made; and train the machine learning model on said inputs, wherein the machine learning model is trained to generate a prediction of a transaction to be made at a later point in time, such that the predicted transaction can be made using the financial assets of the account at said later point in time based on the external factor at said later point in time.

The non-transitory computer-readable medium may comprise instructions which, when executed by a computer, cause the computer to perform any of the above-mentioned method steps according to the above aspects of the invention.

According to a further aspect of the invention, there is provided a computer program product comprising instructions which, when executed by a computer, cause the computer to obtain access to an account of a user, wherein the account holds financial assets; detect details of a plurality of transactions that are made using the financial assets of the account; obtain, for each of the plurality of transactions, details of a motive that led to said transaction being made, wherein each motive for each of the plurality of transactions has been influenced by an external factor at a time of said transaction; input, as inputs into a machine learning model, the details of each of the plurality of transactions and the details of the motive that led to said transactions being made; and train the machine learning model on said inputs, wherein the machine learning model is trained to generate a prediction of a transaction to be made at a later point in time, such that the predicted transaction can be made using the financial assets of the account at said later point in time based on the external factor at said later point in time.

The computer program product may comprise instructions which, when executed by a computer, cause the computer to perform any of the above-mentioned method steps according to the above aspects of the invention.

### Description of Figures

Figure 1 shows a schematic diagram of a communication system, according to the present invention;
Figure 2 shows a schematic block diagram of a system for training a machine learning model to manage financial assets, according to the present invention;
Figure 3 shows a schematic block diagram of a system for validating a machine learning model trained to manage financial assets, according to the present invention;
Figure 4 shows a schematic block diagram of a system for using a machine learning model trained to manage financial assets, according to the present invention;
Figure 5 shows a flow diagram of a computer implemented method for training a machine learning model to manage financial assets, according to the present invention;
   and
Figure 6 shows a data processing device, according to aspects of the present invention.

### Detailed Description

The present disclosure relates to methods and systems for training a machine learning model to manage financial assets. As time goes on, an owner of financial assets may no longer be able to manage their wealth as they were once able to, for example due to changing circumstances or other factors. Further, after death, the owner may wish to secure their assets once they have been left to a beneficiary or other party. The party now gaining control over the assets may not be able to manage the wealth as the user had done, and therefore the wealth may likely be lost.

The owner of the trained machine learning model may also wish to sell, rent, exchange or licence his/her model to another person, persons or businesses. In this way, the receiving party can use the trained machine learning model on their own assets. Further, the receiving party may wish to re-train the trained machine learning model with their own financial decisions. This may create a new derived version of the machine learning model.

The present disclosure sets out a system and method that trains and validates a machine learning model based on the financial activity of a user. Data corresponding to the user's transaction history, among other factors, are input into the machine learning model such that the machine learning model is trained to make predictions of future transactions that could be made, based on whether the user would have made the same transaction. In this way, the trained machine learning model may be used to manage the financial assets of the user by predicting financial transactions that would have been made by the user themselves.

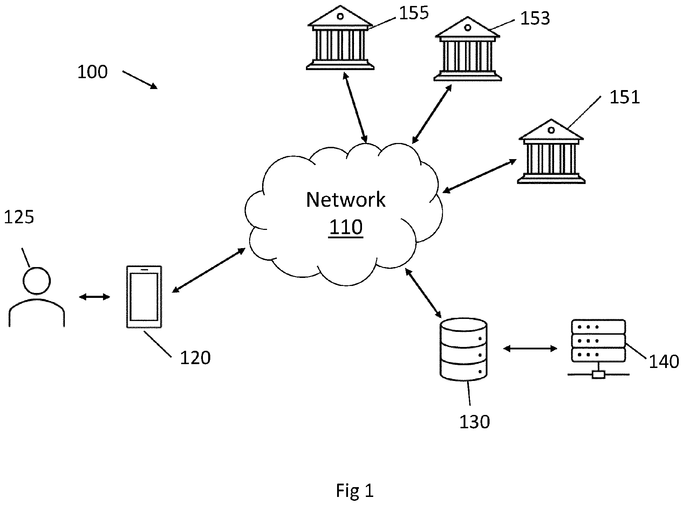

Figure 1 shows a schematic diagram of a communication system 100, in accordance with the present invention. The system 100 includes a communication network 110. The communication network 110 is maintained by a payment network provider. Alternatively, the communication network 110 may be maintained by another entity, external to the payment network provider. The payment network provider may be any payment network provider such as Mastercard^{®}, for instance. However, it would be understood that it could be applicable with any type of payment network provider.

The payment network provider also maintains a training server 130. The training server 130 executes a machine learning model 140. The machine learning model 140 may be a supervised or unsupervised machine learning model. This may be, for example, a linear regression model, a random forest model, an artificial neural network, a support vector regression (SVR) algorithm, a logistic regression model or a gradient boosting algorithm.

In communication with the communication network 110 is a user device 120, one or more financial institutions 151, 153, 155 and the training server 130. The user device 120 is operated by a user 125 to communicate with the communication network 110, and in turn, the training server 130 and the one or more financial institutions 151, 153, 155. As shown in Figure 1, the user 125 uses the user device 120 to communicate with the network 110. However, the user 120 may also have a plurality of different user devices that are in communication with the communication network 110 and is not limited to the single user device 120 shown in Figure 1.

Each of the one or more financial institutions 151, 153, 155 hold and maintain one or more accounts owned by the user 125. As shown in Figure 1, the user may have one account or a plurality of accounts with a plurality of financial institutions 151, 153, 155. However, it is understood that the user 125 may also only have one account or a plurality of accounts with a single financial institution. In this case, only that financial institution will be in communication with the communication network 110.

The user 125 owns a plurality of financial assets. This may be for example, money, stocks, investments, cryptocurrencies, bonds, marketable securities, or any other type of financial asset. The financial institutions 151, 153, 155 are any type of entity or institution that hold or maintain at least one account associated with these financial assets of the user 125. For example, the financial institutions 151, 153, 155 may be investment platforms in which the user has an account with said investment platforms to access and trade with their stocks or bonds. The financial institutions 151, 153 and 155 are not limited to traditional banks.

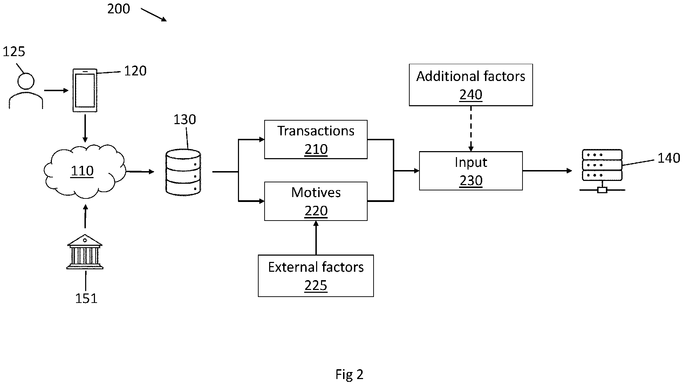

Figure 2 shows a schematic block diagram of a system 200 for training the machine learning model 140 to manage the financial assets of the user 125, according to the present invention. The system 200 is maintained and executed by the payment network provider. As an example, Figure 2 shows a single financial institution 151 that maintains a single account of the user 125 and is in communication with the communication network 110. However, as described above, this may also be a plurality of different financial institutions 151, 153, 155 that each maintain a plurality of different accounts holding the financial assets of the user 125.

The user 125 makes transactions 210 using their financial assets held in the account of the financial institution 151. The user 125 uses the user device 120 to view and track their transactions 210, and therefore the user device 120 is in communication through the network 110 with the financial institution 151. The user 125 may also use other means to communicate with the financial institution 151. The user 125 then proceeds, through the user device 120, to give their permission for the training server 130 to also obtain access to the communication network 110.

This allows the training server 130 to view and monitor each transaction 210 made by the user 125 with the financial assets of the account. The training server 130 detects the transactions 210 being made by the user 125 with the financial assets and obtains data relating to each of these transactions 210 through the communication network 110. This data is then used by the training server 130 to train the machine learning model 140. The communication network 110 may optionally be an open banking network. In this case, the training server 130 may obtain access to the account of the user 125 by receiving data relating to the transactions 210 made by the user 125 through the open banking network.

The plurality of transactions 210 that are made using the financial assets of the account comprise transactions of a plurality of different transaction types. In this way, any transaction 210 of any transaction type made in relation to the financial assets and the account may be detected and used to train the machine learning model 140. The transactions 210 monitored within the financial activity are therefore not limited to purchase transactions made between the account and, for example a merchant, but may be any action made by the user 125 relating to their financial assets associated with the account. This provides a larger range of data to train the machine learning model 140, compared to specific types of transactions made by the user 125. This may improve the predictions of the trained simple machine learning model 140, as it has been trained using a wider range of past transactions 210 relating to the one or more accounts. The different transaction types monitored and obtained by the training server 130 may be, for example, making investments, selling or buying shares on the financial stock market, transactions involving cryptocurrencies such as buying or selling cryptocurrencies, a withdrawal transaction, a purchase transaction i.e., a purchase of good or services, an opening and closing of an account, exchanging between different currencies, transferring money, receiving money and any other action or transaction involving any type of financial asset owned by the user, or any action made in relation to the financial assets that affects the financial status of the account.

The data obtained by the training server 130 from monitoring the financial transactions and activity of the user 125 includes details of the transactions 210 that are made using the financial assets of the account and details of the motives 220 that led to each of the transactions being made.

As the user 125 makes a transaction 210, they will have a motive 220 behind why they made that transaction 210. For each transaction made, the user may have one motive, or they may have a plurality of motives. Furthermore, a single transaction may have been made due to a plurality of motives. For the purpose of illustration, the following aspects of the present invention will be described in relation to a single motive 220 for each transaction 210 made by the user 125. However, as described above, this may be any number of motives 220 for any number of transactions 210.

Each transaction 210 made by the user 125 will therefore have a motive 220 that led the user 125 to make said transaction 210. The motive 220 for each transaction 210 may be the same for a plurality of the transactions 210 or each of the motives 220 for each transaction 210 may be different. Example motives 220 may include reducing loss of assets, increasing investments, decreasing investments, changing investment strategy, decreasing costs, managing specific types of assets.

Each of the motives 220 will also have been influenced by one or more external factors 225. The external factor 225 that influences the motive 220 is a factor external to the account of the user 125 that causes a response from the user 125, where the response is the transactions 210 that they make. The motive 220 that led to each of the transactions 210 being made may therefore be the reason as to why the user 125 made that specific transaction or plurality of transactions 210 in response to the external factor 225. For example, a transaction 210 detected by the training server 130 may be a purchase of a property, the motive 220 may be to increase the user's property portfolio and the external factor 225 may be a decrease in mortgage interest rates.

The external factors 225 may include economic factors. The economic factors may be, for example, interest rates, inflation rates, exchange rates, economic growth of a country or group of countries, the increase or decrease in the GDP (Growth Domestic Product) of a country, commodity prices, increase or decrease in tax rates. These economic factors may have influenced the motive 220 of the user 125 in making their transaction. For example, the change in exchange rates may alter the businesses in different countries that the user 125 invests in, where increasing overseas investments is a motive 220 of the user 125.

The external factors 225 may also further include environmental factors. The environmental factors may be, for example, weather, time of year, time of day or occurrence of any natural disasters. These environmental factors may have influenced the motive 220 of the user 125 in making their transaction. For example, the occurrence of a natural disaster in a country may cause the user 125 to move assets from said country to another, or vice versa, and the time of year may affect which investments are made by the user 125 in which companies or products.

The training server 130 obtains the details of each motive 220 by receiving a user input. The training server 130 sends a query to the user device 120 requesting the user 125 to input their motive 220 that caused the transaction 220 to occur, and the external factor 225 that influenced their motive 220. In response, the user 125 inputs into the user device 120 details of the motive 220 and external factor 225 for each of their transactions 210. The training server 130 then receives from the user device 120, these details corresponding to the motive 220 and external factor 225 that led to each of the transactions.

The user 125 may input the motives 220 and external factors 225, into the user device 125 through a user interface. The user interface of the user device 120 may be, for example, an application on the user device 120 or on a web page accessed through the user device 120. For example, the interface may be a chat bot interface, wherein the user device 120 is provided with prompts and the user 125 inputs their response into the chat interface. The user's 125 responses are then sent to the training server 130 through the communication network 110.

The details of the transactions 210, the motives 220 that led to each of the transactions and the external factors 225 that influenced each of the motives 220 are then used as inputs 230 to train the machine learning model 140. The training server 130 uses the data it has obtained from the communication network 110 to train the machine learning model 140 to predict future transactions based on the past financial activity and motives of the user 125.

In this way, the machine learning model 140 will be trained to generate predictions of transactions to be made in the future using the financial assets, taking into account the user's 125 past transaction history, motives 220 and the external factors 225 that influenced their financial decisions.

As time goes on the state of the external factors 225 may change or remain consistent. The state of the external factors 225 that are used as input 230 to train the machine learning model 140 may therefore have changed by the time the trained machine learning model 140 is used to generate predictions. Therefore, in generating the predictions, the trained machine learning model 140 will be input with the external factors 225 at the time of making the prediction and not at the time of the transactions 210. This may increase the accuracy of the trained machine learning model's 140 predictions, as the predictions are based on what the user 125 would have decided in response to the external factor 225 at that point in time.

The system 200 therefore allows for the financial assets to be secured and managed by training the machine learning model 140 to generate future predictions of transactions that may then be executed using the user's 125 financial assets, based on whether the user 125 would have made the same transactions under the same external factors.

The training server 130 may further optionally obtain data relating to additional factors 240. The additional factors 240 are factors, other than the external factors 225, that have influenced, or may have influenced, the motive 220 that led to the transactions 210 being made by the user 125. These additional factors 240 are received by the training server 130 from another entity, computer network or server outside of the system 200 that is not the user device 120. This other entity may be a public database, private database or the internet for example.

The additional factors 240, similar to the external factors 225, may include environmental factors and/or economic factors. The economic factors may be, for example, interest rates, inflation rates, exchange rates, economic growth of a country or group of countries, the increase or decrease in the GDP (Growth Domestic Product) of a country, commodity prices, increase or decrease in tax rates. The environmental factors may be, for example, weather, time of year, time of day or occurrence of any natural disasters. The additional factors 240 are additional to the external factors 225 and are therefore never the same factor.

The additional factors 240 are different to the external factors 225 in that they are factors that influence the user's 125 decisions without the user 125 realising. For example, the user 125 may make the same or similar transactions at specific times of the day or year, where they are unaware that this additional factor 240 may have affected their motive 220. The training server 130, taking into account these specific times of day or year, can therefore detect transactions patterns that the user 125 may not be aware of, and input this into the training of the machine learning model 140.

The additional factors 240 are then included in the input 230, along with details of the transactions 210, motives 220 and external factors 225, to train the machine learning model 140. This allows for the machine learning model 140 to be trained on additional data that may have affected the user's financial transactions 210, such that the machine learning model 140 may better understand the motives 220 of the user 125 in making their financial transactions 210.

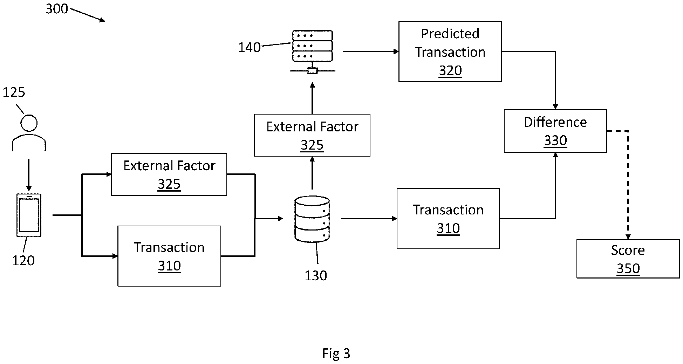

Figure 3 shows a schematic block diagram of a system 300 for validating the machine learning model 140 trained to manage financial assets. To validate the machine learning model 140, an additional or second transaction 310 performed by the user 125 or the user device 120 is detected by the training server 130. Details of an external factor 325 that influenced the user's motive for this second transaction 310 are also then determined by the training server 130, for example, by receiving this data from the user device 120. The data corresponding to the second transaction 310 and the external factor 325 that led to this second transaction 310 are obtained by the training server 130 through the communication network 110, as shown in Figures 1 and 2. The same external factor 325 is then input into the machine learning model 140 whilst the same transaction 310 is used for a future comparison with a predicted transaction 320, as described below.

The training server 130 proceeds to input the external factor 325 into the machine learning model 140. The machine learning model 140 then generates a prediction of the transaction 320, based on the inputted external factor 325.

The predicted transaction 320 generated by the machine learning model 130 based on the input of the external factor 325 is then compared to the transaction 310 actually performed by the user 125 in response to the same external factor 325. The training server 130 determines a difference 330 between the predicted transaction 320 and the user's transaction 310.

The calculated difference 330 is then used by the training server 130 to re-train the machine learning model 140. The re-training of the machine learning model 140 comprises adjusting parameters of the model 140, this may be, for example, adjusting the feature importance, coefficients of the model and weights of different parameters.

The validating of the machine learning model 140 may continue using the system 300 and methods described above, until the difference 330 between the predicted transaction 320 of the machine learning model 140 has been sufficiently minimized and is below a predetermined threshold. This predetermined threshold may be determined by the user 125 and received by the training server 130 from the user device 120.

The system 300 may also optionally generate a score 350 during training and validation. The score 350 generated by the machine learning model 140 corresponds to a probability of whether a transaction 310 detected by the training server 130 would have been predicted by the machine learning model 140 at its current state of training and/or validating.

The score 350 is generated by the training server 130 and corresponds to the difference 330 between the prediction 320 and the performed transaction 310. If the difference 330 between the prediction 320 and the actual transaction 310 are minimal, this will correspond to a high probability that the machine learning model 140 is able to accurately predict the user's 125 transactions, and therefore a high score 350. Whereas if the prediction 320 and actual transaction 310 are very different, this will correspond to a low probability that the machine learning model 140 is able to accurately predict the user's 125 transactions, and therefore a low score 350.

A high score 350 may alternatively correspond to a low probability that the machine learning model 140 is able to accurately predict the user's 125 transactions, and therefore a large difference 330. A low score may alternatively correspond to a high probability that the machine learning model 140 is able to accurately predict the user's 125 transactions, and therefore a minimal difference 330.

The score 350 is then sent to the user device 120 such that it may be viewed by the user 125. The score may also optionally be sent to another device that has been given permission by the user 125 to receive the score 350, for example, a third-party device.

The score 350 therefore indicates to the user 125 and/or another party whether the machine learning model 140 would currently, at the time of generating the score 350, be able to predict the transaction 310 performed by the user 125. This allows the user 125 and other parties to track or monitor the accuracy of the machine learning model 140 as it is being trained and validated. For example, the score 350 may be that the machine learning model 140 is 60%, 80% or 90% likely to be able to predict a transaction 210 performed by the user, where the predicted transaction 320 and the performed transaction 310 are 60%, 80% or 90% similar respectively.

The validating system 300 may also comprise receiving input from the user device 120 of a transaction that the user 125 would have made based on the external factor 325. Rather than detecting an actual transaction 310 performed by the user 125 in response to the external factor 325, as shown in Figure 3, the training server 130 may receive a user input from the user device 120 indicating details of a potential transaction that they would have made based on the external factor 325. This may be conducted using the same user interface as described above in relation to the initial training of the machine learning model 140.

The training server 130 inputs the external factor 325 into the machine learning model 140 to generate the predicted transaction 320. The user input is then compared to the prediction generated 320, and a difference may be determined. The machine learning model 140 is then re-trained based on this difference, in the same way as described above in relation to the difference 330.

In this way, the user 125 does not have to perform transaction 310 for the machine learning model 140 to be validated. The user 125 is able to provide input to the training server 130 to validate the machine learning model 140 using details of transactions they would potentially make, without having to actually perform the transactions for the training server 130 to detect said transactions.

The validating system 300 may also comprise inputting the external factor 325 into the machine learning model 140 to generate the prediction 320, as described above. However, instead of requesting input from the user 125 or obtaining details of a transaction 310 that has been performed to then determine the difference 330, the training server 130 may alternatively send the prediction 320 and external factor 325 to the user device 120 and a prompt requesting the user 125 to input whether they would have performed the predicted transaction 320 in response to the same external factor 325.

The validating of the machine learning model 140 may further optionally comprise generating virtual financial assets for the machine learning model 140 to use in making a prediction. The virtual financial assets are a virtual copy of the financial assets held within the account of the user 125. The virtual financial assets are copies of the financial assets but are not linked to and are not associated with the real account of the user 125, as they cannot be used in making real transactions with the account of the user 125 and the user's real financial assets. The virtual financial assets are held and maintained within a private virtual environment such as an AI sandbox environment. Any transactions made or predicted by the machine learning model 140 in this validation step are virtual and may only be implemented within this virtual (i.e., simulated) environment.

The validating may therefore include providing access of the virtual financial assets to the machine learning model 140, such that the machine learning model 140 may predict and perform virtual transactions using the virtual financial assets.

The prediction of the virtual transaction is generated by the training server 130 inputting into the machine learning model 140 an external factor. This may be one of the external factors 225 associated with the plurality of transactions used in the training of the machine learning model 140, as shown in system 200 of Figure 2. Alternatively, it may be the external factor 325 shown in system 300 of Figure 3, used in validating the machine learning model 140, or it may be another, different external factor.

Once the external factor has been input into the machine learning model 140, a prediction of a virtual transaction using the virtual financial assets is generated. This prediction of the virtual transaction is therefore based on the external factor input into the machine learning model 140.

To complete the validation of the model 140, the training server 130 receives an input from the user device 120 of a virtual transaction that they would have made with the virtual financial assets based on the same external factor. This may include the training server 130 sending to the user device 120, details of the external factor and a prompt requesting input from the user 125 of a transaction they would make. This may be conducted using the same user interface as described above in relation to the initial training of the machine learning model 140.

The input of the virtual transaction that the user 125 would perform is then compared to the predicted virtual transaction, where both transactions are based off of the same external factor. From this comparison, a difference between the prediction and the user input is determined. Similarly, to the difference 330 of system 300 shown in Figure 3, the difference between the virtual transaction prediction and the user input of the transaction is used to further train the machine learning model 140. This may be, for example, updating or adjusting parameters of the machine learning model 140, such that the difference between future predictions and transactions made by the user 125 is minimized.

By providing virtual financial assets to the machine learning model 140, the machine learning model 140 may be validated using copies of the user's 125 real financial assets. This may improve the training of the machine learning model 140 without the user 125 having to give full access of their financial assets to the machine learning model 140 before it's training, and validation has been completed.

Instead of virtual financial assets, the machine learning model may be given access to a proportion of the real financial assets of the account. In this way, the machine learning model 140 may generate predictions based on the user's 125 real financial assets, where these predictions may be compared to transactions the user 125 does make with that specific proportion of financial assets (that have been given to the machine learning model). Advantageously, this allows the trained machine learning model to be validated using a proportion of the user's real financial assets, rather than virtual assets. This may further increase the performance of the machine leering model as it can be validated and re-trained using the user's actual financial assets.

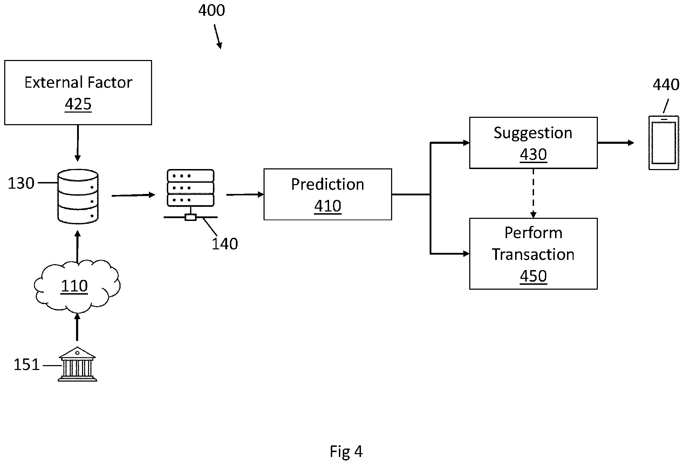

Figure 4 shows a schematic block diagram of a system 400 for using the machine learning model 140 trained to manage financial assets. The system 400 includes the communication network 110, the financial institution 151, the training server 130 and the trained machine learning model 140 also shown in Figures 1 to 3. The system 400 is implemented by the payment network provider, or another entity, such that the trained machine learning model 140 may be used to manage and secure the financial assets of the account held by the financial institution 151.

Once the machine learning model 140 has been trained, it may be implemented such that it generates a prediction 410 of transactions to perform using the financial assets without any further input from the user 125.

The training server 130 obtains details relating to an external factor 425. This external factor 425 may be the same as one of the external factors 225 that influenced the motives 220 used to train the machine learning model 140. Alternatively, the external factors 225 may have changed since the transactions 210 were used to train the machine learning model 140, and therefore the external factor 425 used within system 400 may be different to those used in training.

The training server 130 obtains details of the external factor 425 at the time of making the prediction 410. If the external factor 425 is the same as one of the external factors 225 used in the training of the machine learning model 140, the obtaining of the details of the external factor 425 may comprise monitoring the external factors 225 such that details corresponding to one of these external factors 425 may be detected at the time of making the prediction 410. The details of the external factor 425 may be received from an external source such as a public database, private database, or the internet. The training server 130 then inputs the external factor 425 into the trained machine learning model 140 to generate the prediction of the transaction 410. As the machine learning model 140 has been trained using the past financial activity and motives of the user 125, this prediction 410 will be accurate to a transaction that the user 125 would have made using the same financial assets and the same external factor 425.

The prediction of the transaction 410 is then implemented using the system 400. This includes providing the prediction 410 as a suggestion to a third-party device 440. The third-party device is any device that has been given permission by the user 125 to be able to receive the suggestions 430 generated by the trained machine learning model 140. This may be a device of a beneficiary set to receive the financial assets of the user 125 after death, or another party's device who has been, for example, licensed by the user 125 to use the trained machine learning model 140 for financial advice.

The predicted transaction 410 is also performed by the system 400. The transaction 410 predicted by the machine learning model 140 is executed using the financial assets of the account, based on whether the user 125 would have made the same transaction under the external factor 425. In this way, the system 400 and trained machine learning model 140 is given access to the account held by the financial institution 151 and can be used to control and manage the financial assets of the account.

After predicting a transaction 410, this output of the machine learning model 140 is sent back to the training server 130 that then, through the communication network 110, executes the transaction 410 using the financial assets of the account held by the financial incaution 151. In this way, the system 400 performs the predicted transaction 410 without any further input from the user 125, user device 120, or any other party such as the third-party device 440.

The system 400 may include both sending the suggestion 430 of the transaction 410 to the third-party device 440 and performing the transaction 410 using the financial assets. This may be sending the suggestion 430 to the third-party device 440, and the third-party e.g., a beneficiary, then performing the transaction 410. Alternatively, this may be sending the suggestion 430 to the third-party device 440 as a notification of the predicted transaction 410, whilst the training server 130 then executes, through the communication network 110, the transaction at the financial institution 151 associated with the account.

The inputting of the external factor 425 to generate the prediction 410 may further include inputting any number of additional factors that may have influence on the predicted transaction 410. Similarly, to the additional factors 240 of training system 200 shown in Figure 2 that are optionally used to train the machine learning model 140, the training server 130 may input additional factors, such as the additional factors 240, into the trained model 140 with the external factor 425 to generate the prediction 410.

The system 400 may also optionally include the user 125 setting limits on the predictions 410 that can be generated using the machine learning model 140. The training server 130 receives requirements from the user device 120. The requirements are characteristics of transactions that could be predicted and performed by the machine learning model 140 that have been limited by the user 125.

For example, the requirements set by the user device 120 may be specific countries to invest in, excluding assets to buy, excluding operations to perform, a minimum percentage of investments, durations of ownerships of assets, maximum amount of assets that can be borrowed, person that can or cannot send or receive money and assets, maximums value of each withdrawal, maximum amount of each investment, and any other parameter that limits the machine learning model's use of the financial assets.

The training server may then determine whether the predicted transaction 410 complies or is in agreement with these requirements. If the transaction 410 predicted by the machine learning model falls within the characteristics of the transaction requirements, said transaction will be performed by system 400 using the financial assets.

However, if the predicted transaction 410 does not comply with the requirements and falls outside the characteristics set by the user 125, the transaction shall not be performed by the system 400. This allows for the user 125, to prevent certain types of transactions from being performed by the system 400.

After using the trained machine learning model 140 to manage the financial assets of the account for a predefined amount of time, the trained machine learning model 140 becomes expired. The training server 130 stores the machine learning model 140 in an archive such that it cannot be used again to make any further predictions or transactions. The predefined time before the trained machine learning model 140 becomes expired is set by the user 125, and may be for example, 1 year, 10 years or 20 years.

After using the trained machine learning model 140 to manage the financial assets for the predefined amount of time, the system 400 may alternatively re-train the machine learning model 140 based on financial activity of a second user.

To do this, the training server 130 obtains details of a plurality of transactions the second user would make using the financial assets of the account, details of a motive that would lead the second user to make each of these transactions and the external factors that influenced the motives. The external factors may be the same external factors that influenced the user's 125 motives for making their plurality of transactions, or they may be different external factors.

The machine learning model 140 is then re-trained by inputting the plurality of transactions, motives and external factors that have been obtained from the second user. The re-trained machine learning model 140 can therefore be used to generate predictions of transactions based on the past transactions 210 and motives 220 of the user 125, as well as the past transactions and motives of the second user.

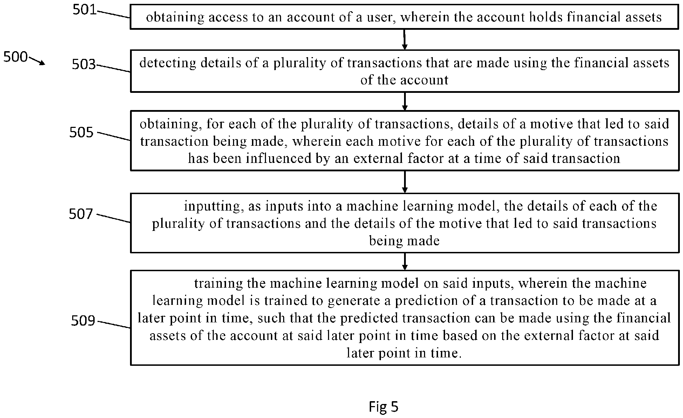

Figure 5 shows a flow diagram of a computer implemented method for training a machine learning model to manage financial assets, according to the present invention.

At step 501 the method involves, obtaining access to an account of a user, wherein the account holds financial assets.

At step 503 the method involves, detecting details of a plurality of transactions that are made using the financial assets of the account.

At step 505 the method involves, obtaining, for each of the plurality of transactions, details of a motive that led to said transaction being made, wherein each of the motives for the plurality of transactions has been influenced by an external factor at a time of said transaction.

At step 507 the method involves, inputting, as inputs into a machine learning model, the details of each of the plurality of transactions and the details of the motive that led to said transactions being made.

At step 509 the method involves, training the machine learning model on said inputs, wherein the machine learning model is trained to generate a prediction of a transaction to be made at a later point in time, such that the predicted transaction can be made using the financial assets of the account at said later point in time based on a specific external factor at said later point in time, and wherein the specific external factor is one of the external factors.

It will be appreciated that any of the methods described herein, and any step of the methods, can be implemented by a computer. Such implementation may take the form of a processor executing instructions stored on a non-transitory computer-readable medium or media, wherein when executed the instructions cause the processor to perform any one or more steps of any of the methods described herein. Individual steps of any method may be implemented by different processors that are all collectively acting in accordance with computer-readable instructions stored on one or more storage media. The processor(s) may be component(s) of system, for example a processor of a device.

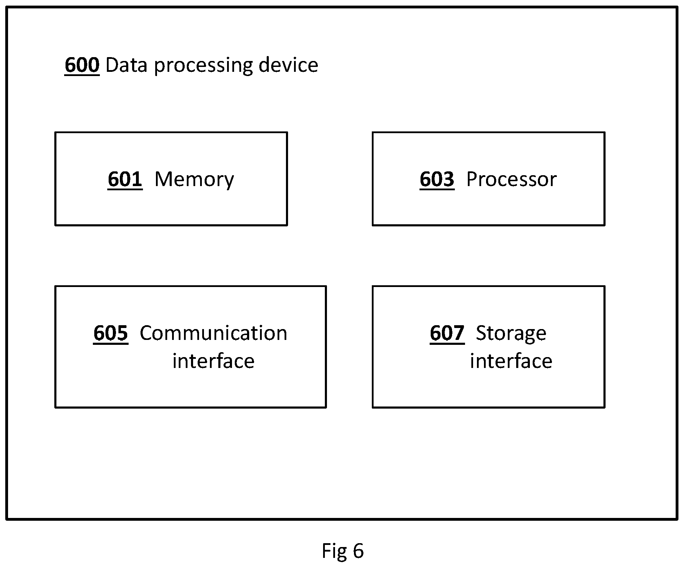

Similarly, any steps of any of the methods described herein may be performed by data processing devices. By way of example, Figure 6 shows, in schematic form, a data processing device 600 that is suitable for performing the functions of the payment network provider server and the one or more user servers, or any of the modules therein. The data processing device 600 may automatically perform any of the methods described herein.

Data processing device 600 includes a processor 603 for executing instructions. Instructions may be stored in a memory 601. Processor 603 may include one or more processing units (e.g., in a multi-core configuration) for executing instructions. The instructions may be executed within a variety of different operating systems on the data processing device 600, such as UNIX, LINUX, Microsoft Windows^{®}, etc. More specifically, the instructions may cause various data manipulations on data stored in memory 601 (e.g., create, read, update, and delete procedures). It should also be appreciated that upon initiation of a computer-implemented method, various instructions may be executed during initialization. Some operations may be required to perform one or more methods described herein, while other operations may be more general and/or specific to a particular programming language (e.g., C, C#, C++, Java, or other suitable programming languages, etc.).

Processor 603 is operatively coupled to a communication interface 605 such that data processing device 600 can communicate with a remote device, such as another data processing device of the system. For example, communication interface 605 may receive communications from another member of the system.

Processor 603 may also be communicatively coupled to a storage device such as a database, depending on the function of data processing device 600 within the context of the system. The storage device is any computer-operated hardware suitable for storing and/or retrieving data, where in the case of a secure storage medium the data is stored and retrieved securely.

The storage database may, for example, store the training server 130 and the machine learning model 140, and it can be external to data processing device 600 and located remotely. Alternatively, it can be integrated in data processing device 600. For example, data processing device 600 may include memory 601 as one or more hard disk drives acting as a storage database. Alternatively, where the storage database is external to data processing device 600, it can comprise multiple storage units such as hard disks or solid-state disks in a redundant array of inexpensive disks (RAID) configuration. The storage database may include a storage area network (SAN) and/or a network attached storage (NAS) system. In some arrangements, the system and methods may be deployed in a cloud-based environment.

Processor 603 can be operatively coupled to the storage device (storage database) via a storage interface 607. Storage interface 607 is any component capable of providing processor 603 with access to the storage device. Storage interface 607 may include, for example, an Advanced Technology Attachment (ATA) adapter, a Serial ATA (SATA) adapter, a Small Computer System Interface (SCSI) adapter, a RAID controller, a SAN adapter, a network adapter, and/or any component providing processor 603 with access to the storage device.

Memory 601 may include, but is not limited to, RAM such as dynamic RAM (DRAM) or static RAM (SRAM), ROM, erasable programmable read-only memory (EPROM), electrically erasable programmable read-only memory (EEPROM), and non-volatile RAM (NVRAM). The above memory types are exemplary only and are not limiting as to the types of memory usable for storage of a computer program.

As used herein, the term "non-transitory computer-readable media/medium" is intended to be representative of any tangible computer-based device implemented in any method or technology for short-term and long-term storage of information, such as, computer-readable instructions, data structures, program modules and sub-modules, or other data in any device. The methods described herein may be encoded as executable instructions embodied in a tangible, non-transitory, computer readable medium, including, without limitation, a storage device, and/or a memory device. Such instructions, when executed by a processor, cause the processor to perform at least a portion of the methods described herein. Furthermore, as used herein, the term "non-transitory computer-readable media/medium" includes all tangible, computer-readable media, including, without limitation, non-transitory computer storage devices, including, without limitation, volatile and non-volatile media, and removable and non-removable media such as a firmware, physical and virtual storage, CD-ROMs, DVDs, and any other digital source such as a network or the Internet, as well as yet to be developed digital means, with the sole exception being a transitory, propagating signal.

As will be appreciated based on the specification herein, the above-described embodiments of the disclosure may be implemented using computer programming or engineering techniques including computer software, firmware, hardware or any combination or subset thereof. Any such resulting program, having computer-readable code means, may be embodied, or provided within one or more computer-readable media, thereby making a computer program product, i.e., an article of manufacture, according to the discussed embodiments of the disclosure. The article of manufacture containing the computer code may be made and/or used by executing the code directly from one medium, by copying the code from one medium to another medium, or by transmitting the code over a network.

While the disclosure has been described in terms of various embodiments, the person skilled in the art will recognise that the disclosure can be practiced with modification within the spirit and scope of the claims.

As is described in relation to Figure 2, each transaction within the plurality of transactions 210 may have an additional factor 240, that is not the external factor 225, that may have influenced the user's 125 motive 220 to make said transaction 210. However, it may also be possible that each transaction within the plurality of detected transactions 210 has any number of additional factors 240 associated with the motive 220 that led to said transactions 210. The system 200 may take into account a plurality of different external factors 240 that influenced a motive 220 of a transaction 210 performed by the user 125.

It is shown in Figure 3, that the machine learning model 140 is validated by comparing a single detected transaction 310 and a single predicted transaction 320. However, the machine learning model 140 may also be validated using a plurality of transactions performed by the user 125 (and detected by the training server 130). In this case, the plurality of transactions performed by the user 125 are compared to a plurality of predicted transactions generated by the machine learning model 140, after being input with each of the external factors that led to each of the plurality of transactions being performed. Therefore, a plurality of differences between each transaction performed and each corresponding predicted transaction can be determined and used to validate the machine learning model 140.

Further, in regard to the validating of the trained machine learning model 140, as shown in system 300 of Figure 3, the external factor 325 used in the validating of the machine learning model 140 may be one or more of the same external factors 225 that led to the one or more transactions of the plurality of transactions 210 shown Figure 2 being made by the user 125.

Although it is described in relation to the validating of the machine learning model 140 that only one virtual transaction is predicted by the machine learning model 140, given a plurality of different external factors the machine leaning model may predict a plurality of different virtual transactions. In this case, the plurality of different predicted virtual transactions using the virtual financial assets can be compared to a plurality of different user inputs, where each user input corresponds to one of the external factors.

Although it is described in Figure 4 that a single external factor 425 is monitored and detected to use as input into the trained machine learning model 140, it may also be any number of external factors that are monitored by the training server 130 for input into the trained machine learning model 140. In this way, a plurality of transactions may be predicted by the trained model 140 to either be used as a suggestion 430 or be performed 450 by the system 400 with the financial assets.

Figure 4 shows that the suggestion 430 is sent to a third-party device 440. However, this may also include sending the suggestion 430 to the user device 120. In this way, the user 125 can receive the suggested predicted transaction 410 in order to accurately manage their assets without having to have any further input from themselves.

The re-training of the trained machine learning model 140 using the financial activity of a second user, may further include re-training the trained machine learning model using financial activity data related to any number of users in addition to the first user 125. The plurality of additional user are users that have been given permission by the user 125 to be able to re-train the machine learning model based on their own financial activity and transactions.

## Claims

1. A computer implemented method for training a machine learning model to manage financial assets, the method comprising:
obtaining access to an account of a user, wherein the account holds financial assets;
detecting details of a plurality of transactions that are made using the financial assets of the account;
obtaining, for each of the plurality of transactions, details of a motive that led to said transaction being made, wherein each motive for each of the plurality of transactions has been influenced by an external factor at a time of said transaction;
inputting, as inputs into a machine learning model, the details of each of the plurality of transactions and the details of the motive that led to said transactions being made; and
training the machine learning model on said inputs, wherein the machine learning model is trained to generate a prediction of a transaction to be made at a later point in time, such that the predicted transaction can be made using the financial assets of the account at said later point in time based on the external factor at said later point in time.

2. The computer implemented method of claim 1, wherein obtaining, for each of the plurality of transactions, details of a motive that led to said transaction being made, comprises:
receiving, from a user device, the details of the motive that led to each of the transactions being made and optionally the external factor that influenced each motive for each of the transactions.

3. The computer implemented method of claim 1 or 2, wherein obtaining access to the account of the user comprises using open banking to receive data relating to the plurality of transactions that are made using the financial assets of the account.

4. The computer implemented method of any preceding claim, the method further comprising:
obtaining details of an additional transaction made using the financial assets of the account;
obtaining details of an additional external factor at a time of the additional transaction, wherein the additional external factor influenced a motive that led to the additional transaction being made;
inputting the additional external factor at the time of the additional transaction into the machine learning model;
generating a prediction, using the machine learning model, of a predicted additional transaction that uses the financial assets of the account, wherein the predicted additional transaction is based on the additional external factor at the time of the additional transaction;
determining a difference between the additional transaction and the predicted additional transaction;
re-training the machine learning model based on the difference between the additional transaction and the predicted additional transaction.

5. The computer implemented method of claim 4, the method further comprising:
generating a score corresponding to the difference; and
providing the score to a user device.

6. The computer implemented method of any preceding claim, the method further comprising:
generating virtual financial assets maintained within a virtual environment, wherein the virtual financial assets are a copy of the financial assets of the user;
providing access of the virtual financial assets to the machine learning model;
inputting into the machine learning model, the external factor at the later point in time;
generating, using the machine learning model, a prediction of a virtual transaction to be made using the virtual financial assets, based on the external factor at the later point in time;
receiving an input, from a user device, details of a virtual transaction to be made using the virtual financial assets based on the external factor at the later point in time;
determining a difference between the predicted virtual transaction and the input from the user device; and
re-training the machine learning model on the difference between the predicted virtual transaction and the input from the user device.

7. The computer implemented method of any preceding claim, wherein the external factor is an environmental factor or an economic factor.

8. The computer implemented method of any preceding claim, the method further comprising:
receiving, from an additional device, additional factors associated with each of the plurality of transactions at the time of said transactions, and wherein the additional device is a third-party device; and
wherein the step of inputting, as inputs into a machine learning model, the details of each of the plurality of transactions and the details of each motive that led to said transactions being made, further comprises:
inputting the inputs and the additional factors into the machine learning model;
and
training the machine learning model on the inputs and the additional factors, such that the machine learning model is trained to generate the predictions of the transaction to be made at a later point in time based on the additional factors, the details of each of the plurality of transactions and the details of the motive that led to said transactions being made.

9. The computer implemented method of any preceding claim, the method further comprising:
obtaining details of the external factor at the later point in time;
inputting, into the trained machine learning model, the details of the external factor at the later point in time; and
generating a prediction, at the later point in time using the trained machine learning model, of a new transaction that uses the financial assets of the account, wherein the predicted new transaction is based on the external factor at the later point in time.

10. The computer implemented method of claim 9, the method further comprising:
sending the predicted new transaction as a suggestion to a further user device.

11. The computer implemented method of claim 9 or claim 10, the method further comprising:
automatically performing the predicted new transaction with the financial assets of the account upon generating the prediction.

12. The computer implemented method of claim 9 or claim 10, or claim 11, the method further comprising:
receiving requirements from the user device, wherein the requirements are characteristics of the plurality of transactions that have been limited by the user; and
determining whether the predicted new transaction complies with the requirements; and
if the predicted new transaction does comply with the requirements, performing the predicted new transaction using the financial assets of the account.

13. The computer implemented method of any preceding claim, wherein the user is a first user, the method further comprising:
re-training the trained machine learning model using motives, received from a second user, that led to a second plurality of transactions being made, influenced by an external factor;
wherein the re-trained machine learning model is trained to generate a further prediction of a transaction to be made at the later point in time.

14. A system for training a machine learning model to manage financial assets, the system configured to perform the method steps of any of claims 1 to 13.

15. A non-transitory computer-readable medium comprising instructions which, when executed by a computer, cause the computer to carry out the method steps of any claim 1 to 13.
